# EUROPÄISCHE PATENTSCHRIFT

(11) **EP 2 516 903 B1**
(45) Veröffentlichungstag und Bekanntmachung des Hinweises auf die Patenterteilung: **08.05.2019**
(21) Anmeldenummer: 10798510.3
(22) Anmeldetag: 14.12.2010
(51) Int. Cl.: F16K 27/00, F16K 31/06

(54) **ELEKTROMAGNETISCH SCHALTBARES VENTIL ZUM EINBAU IN EINEN EINBAUBLOCK**
ELECTROMAGNETICALLY SWITCHABLE VALVE FOR INSTALLATION IN AN INSTALLATION BLOCK
VANNE COMMUTABLE DE FAÇON ÉLECTROMAGNÉTIQUE POUR LE MONTAGE DANS UN BLOC INTÉGRÉ

(30) Priorität: 21.12.2009 DE 102009060030
(43) Veröffentlichungstag der Anmeldung: 31.10.2012
(73) Patentinhaber: Robert Bosch GmbH, 70469 Stuttgart (DE)
(72) Erfinder: KABST, Marcus, 97737 Gemünden am Main (DE); TAN, Kae Shyuan, 97816 Lohr am Main (DE); RÖDER, Stefan, 97753 Karlstadt (DE); GOLD, Theodor, 97753 Karlstadt (DE); STOCK, Rainer, 97640 Hendungen (DE)
(74) Vertreter: Thürer, Andreas
(86) Internationale Anmeldenummer: PCT/EP2010/007599
(87) Internationale Veröffentlichungsnummer: WO 2011/085767

(56) Entgegenhaltungen:
- WO-A1-00/34966
- DE-A1- 4 221 757
- GB-A- 2 115 907
- GB-A- 2 332 538
- US-A- 4 809 749
- US-A- 4 858 956
- US-A1- 2002 038 670
- US-A1- 2003 084 947

## Beschreibung

Die vorliegende Erfindung betrifft ein elektromagnetisch schaltbares Ventil sowie einen Einbau- oder Steuerblock zur Aufnahme des elektromagnetisch schaltbaren Ventils.

### Allgemeiner technischer Hintergrund:

Ein Magnetventil ist ein Ventil, das von einem Elektromagneten betätigt wird, der in der Regel axial in Verlängerung zu einem Ventilkolben oder Ventilkörper am Ventilgehäuse montiert ist und einen mit dem Ventilkolben/ -körper mechanisch gekoppelten magnetischen Zuganker elektromagnetisch entgegen der Vorspannkraft einer Feder anzieht oder abstößt. Magnetventile dieser Gattung können auch mit einer Wegeerfassung für den Ventilkolben / - körper ausgerüstet sein, um in diesem Fall als Servoventile betrieben werden zu können. Grundsätzlich werden im Stand der Technik derartige Magnetventile in direktgesteuerte Ventile, servogesteuerte Ventile, zwangsgesteuerte Ventile und druckgesteuerte Ventile unterschieden.

Die vorliegende Erfindung betrifft indessen im Wesentlichen die Kategorie der direktgesteuerten Magnetventile, bei denen ein Dichtelement, d.h. vorzugsweise ein Ventilkolben oder -körper direkt über das Magnetsystem geschaltet wird. Hier muss regelmäßig das Dichtelement gegen einen wirksamen Betriebsdruck allein durch den elektromagnetischen Antrieb vom Ventilsitz abheben. Ggf. unterstützt vom Mediumsdruck hält dabei eine Schließfeder das Ventil geschlossen.

Eine solche Ventilbauform wird auch als "normally closed"-Ventil (NC-Ventil) bezeichnet. Im Umkehrzug existiert aber auch eine Ventilbauform (unter der Bezeichnung "normally opened"-Ventil oder NO-Ventil), bei der die Feder das Dichtelement in Öffnungsposition vorspannt und der elektromagnetische Antrieb das Dichtelement in Schließposition zwingt.

Im Zuge der aktuellen Entwicklungen auf dem Gebiet der Magnetventiltechnik wird grundsätzlich ein Ziel angestrebt, die Schaltzeiten von Magnetventilen, insbesondere von elektromagnetischen Schaltwegeventilen zu verkürzen.

Für diese sogenannten schnell schaltenden Schaltwegeventile (tSₑᵢₙ/tSₐᵤₛ < 3ms) wird bisher eine besondere, vom üblichen Aufbau von Schaltwegeventilen in der Industrie- oder Mobilhydraulik abweichende konstruktive Ausführung des Ventils benötigt. Unterschiede zu konventionellen Ventilen finden sich u.a. in
1. besonders kurzen Hüben und geringen Überdeckungen zur Erzielung geringer Schaltzeiten,
2. einem besonders abgestimmten Magnetsystem vorzugsweise in Plattenankerausführung zur Bereitstellung der erforderlichen Magnetkräfte zum Zwecke einer Überwindung der dynamischen Strömungskräfte am Ventilkolben und damit zur Gewährleistung der geforderten Einschaltzeiten,
3. einer besonders ausgelegten Rückstellfeder zur Überwindung der dynamischen Strömungskräfte am Ventilkolben und damit zur Gewährleistung der geforderten Abschaltzeiten sowie der im Einsatz üblichen hohen Schaltfrequenzen sehr hohen Lebensdaueranforderungen sowie
4. einer besonderen Ausführung der im Ventil befindlichen Tribostellen zur Gewährleistung der infolge der kurzen Schaltzeiten und im Einsatz üblichen hohen Schaltfrequenzen sehr hohen Lebensdaueranforderungen.

Weitere wesentliche Forderungen an derartige schnell schaltende Schaltwegeventile ergeben sich aus einer geplanten Verwendung im Rahmen der Digitalhydraulik, bei der einzelne Steuerkanten von Proportional-Ventilen durch mehrere digital angesteuerte Schnellschaltventile in 2/2-Wegeausführung mit dem Ziel einer Erhöhung der Regeldynamik sowie Reduzierung der Ausfallwahrscheinlichkeit ersetzt werden. Für diesen Einsatzfall ist insbesondere ein konstruktive Ausführung des Ventils hinsichtlich
- eines geringen benötigten Einbauraums für das Ventil mit Magnetsystem zur bestmöglichen Wärmeableitung,
- einer Herstellungskostenoptimierten Fertigung sowie
- eines auf die Funktionalität der Schnellschaltventile abgestimmten Aufbaus vorzusehen.

Eine wesentliche Bedeutung kommt dabei der konstruktiven Ausführung des Ventils zu.

### Stand der Technik

Aus dem Stand der Technik beispielsweise gemäß der DE 10 2007 047 127 A1 ist demzufolge ein schnell schaltendes Magnetventil dieser Gattung bekannt. Dieses Ventil (in Form eines Sitzventils) hat einen Ventilkolben zum stirnseitigen Öffnen und Schließen eines Einlassanschlusses, wobei der Ventilkolben an einem axialen inneren Endabschnitt mit einer perforierten (gelochten) Ankerplatte versehen ist. Die Ankerplatte ist in einem Ankerplattenraum axialverschieblich aufgenommen, der sich axial unterhalb eines Elektromagneten (d.h. zwischen Elektromagnet und Ventilkolben) im Wesentlichen bestehend aus einem Magnetkern und einer Magnetspule anordnet. Des Weiteren ist der Ventilkolben durch eine Feder in Schließrichtung vorgespannt, die in einem vom Magnetkern umgebenen Federraum aufgenommen ist.

Beim Öffnen des bekannten Magnetventils erhält der Eingangsanschluss über eine im Ventilkolben ausgebildete axiale Durchgangsbohrung eine Fluidverbindung zum Federraum und von dort zu einem Ausgangsanschluss des Ventils. Die vorstehend genannten Ventilelemente sind hierbei in offener Bauweise in eine in einem Block ausgebildete Ventilbohrung einzeln eingesetzt.

Die Druckschrift GB 2 332 538 A zeigt ein Ventil, das einschließlich seines Elektromagneten vollständig in einer geraden Bohrung in einem Steuerblock versenkt wird. Das Ventil wird von einer Platte abgedeckt, wobei die Platte von einem Sicherungsring gehalten wird.

### Aufgabe der Erfindung

Angesichts dieses Stands der Technik ist es die Aufgabe der vorliegenden Erfindung, eine elektromagnetisch betätigbare Ventileinrichtung dieser Gattung bereit zu stellen, die eine erhöhte Funktionalität besitzt. Ein besonderes Ziel der Erfindung ist es, die Lebensdauer der Ventileinrichtung durch Verringerung der im Betrieb auftretenden mechanischen und/oder thermischen Belastungen zu verlängern. Ein weiteres besonderes Ziel ist es, die Ventileinrichtung so zu gestalten, dass sie möglichst kostengünstig herstellbar ist.

### Allgemeine Beschreibung der Erfindung

Diese Aufgabe wird durch eine Steuervorrichtung mit den Merkmalen des unabhängigen Patentanspruchs gelöst. Vorteilhafte Ausgestaltungen der Erfindung sind Gegenstand der Unteransprüche.

Das bei der vorliegenden Erfindung eingesetzte (elektromagnetisch betätigte) Ventil hat nunmehr einen Ventilschieber, der axial verschiebbar in einem (Ventil eigenen) ein- oder mehrstückigen Ventilgehäuse gelagert ist und einen Elektromagneten (elektromagnetische Aktorbaugruppe) zum Betätigen des Ventilschiebers. Der Elektromagnet ist hierbei derart positioniert, dass er im Ventilgehäuse vollständig aufgenommen ist. Auf diese Weise wird erreicht, dass während des Betriebs des Elektromagneten generierte Wärme in großem Umfang in das Ventilgehäuse abgegeben wird und damit die Betriebstemperatur des Ventils und insbesondere des Elektromagneten sinkt. Durch diese Reduktion der thermischen Belastung lässt sich die durchschnittliche Lebensdauer des Ventils verlängern.

Gemäß einer vorteilhaften Weiterbildung der Erfindung ist das Ventilgehäuse als eine Ventilpatrone zur vorzugsweise vollständigen Aufnahme in einem Ventilblock ausgebildet. Das Ventil kann somit vormontiert werden, wodurch sich dessen Einbau vereinfacht und beschleunigt. Auch die die Ventilpatrone aufnehmende Einbau- oder Aufnahmebohrung auf Seiten des Einbaublocks kann somit vereinfacht und daher leicht hergestellt werden, da sämtliche konstruktive Maßnahmen zur langlebigen Lagerung des Ventilschiebers etc. in der Ventilpatrone umgesetzt sind. Zudem wird durch das im Wesentlichen vollständige Einschieben der Ventilpatrone in den Ventilblock erreicht, dass der Elektromagnet ebenfalls in den Ventilblock gelangt, bzw. vollständig in diesem versenkt wird, sodass Wärmeenergie über die Ventilpatrone in den Ventilblock großflächig abgegeben werden kann. Hierdurch kann ein Temperaturstau im Elektromagnet vermieden werden.

Erfindungsgemäß ist es, das Ventilgehäuse in einem den Elektromagneten aufnehmenden axialen Abschnitt an seiner äußeren Mantelseite mit einer Wärmeübertragungsfläche auszubilden. Diese Wärmeübertragungsfläche selbst zeichnet sich vorliegend vorzugsweise durch eine besonders glatte (ggf. geschliffene und/oder polierte) Oberfläche aus, die möglichst viel Flächenkontakt mit dem Einbaublock eingeht, um hierdurch einen großen Wärmeübertragungsweg zu generieren. Ggf. kann das Ventilgehäuse zumindest in dem den Elektromagneten aufnehmenden Axialabschnitt aus einem Material bestehen, das eine gute Wärmeleitfähigkeit besitzt wie beispielsweise ein Metallwerkstoff, Aluminium, Kupfer oder dergleichen oder zusätzlich mit einem solchen Werkstoff mantelseitig beschichtet ist, um einen guten Wärmeübergang auf den Einbaublock zu erreichen.

Weiter ist die Mantelseite des Ventilgehäuses längs des darin gelagerten Ventilschiebers in eine der Zahl der Anschlüsse des Ventils entsprechende Zahl an Umfangsabsätzen unterteilt, die sich ausgehend von einem axialen Endabschnitt des Ventilgehäuses stufenweise in Richtung zum den Elektromagneten aufnehmenden Ventilgehäuseabschnitt radial aufweiten. Dieser Aufbau lässt sich besonders einfach herstellen und ist daher kostengünstig. Auch gestaltet sich die Montage einer derart geformten Ventilpatrone als wenig problematisch.

Erfindungsgemäß besonders günstig erweist sich hierbei, die einzelnen Umfangsabsätze durch radial vorstehende Umfangsdichtleisten axial zu begrenzen, deren Durchmesser ebenfalls ausgehend von dem axialen Endabschnitt des Ventilgehäuses stufenweise in Richtung zum den Elektromagneten aufnehmenden Abschnitt zunimmt, wobei der Radius des den Elektromagneten aufnehmenden Ventilgehäuseabschnitts größer ist als der Radius der unmittelbar axial benachbarten, größtdurchmessrigen Umfangsdichtleiste.

Durch die Dichtleisten werden Anschlusskammern für die Ventilpatrone im Ventilblock geschaffen, die einfach abzudichten sind. Dies trägt ebenfalls zur Verringerung des Herstellungsaufwands bei.

Die erfindungsgemäße (hydraulische) Steuervorrichtung sieht demzufolge einen Steuer- oder Einbaublock vor, der mit zumindest einer Ventilaufnahmebohrung ausgebildet ist und in die ein Ventil gemäß einem der vorstehenden Ansprüche derart eingebaut ist, dass der den Elektromagneten aufnehmende Abschnitt der Ventilpatrone bzw. der Elektromagnet in den Steuerblock (im Wesentlichen) vollständig aufgenommen (darin versenkt) ist. Hierdurch werden jene Vorteile erreicht, wie sie vorstehend bereits anhand des Ventils genannt sind. D.h. ein optimaler Wärmeübergang vom Ventilgehäuse auf den Einbaublock wird gewährleistet. Ferner wird der für das Ventil benötigte Bauraum auf ein Minimum reduziert, was insbesondere für den Anwendungsfall in einer Digitalhydraulik von Bedeutung ist. Die Herstellung der Ventilbohrung im Einbaublock ist im vorliegenden Fall der Verwendung einer vormontierten Ventilpatrone einfach und damit kostengünstig. Sie ist damit für den Einbau hoher Stückzahlen besonders geeignet, da sie beispielsweise mittels eines sogenannten Stufenwerkzeugs herstellbar ist. Der Zerspanungsaufwand kann folglich gering gehalten werden.

Erfindungsgemäß wird das in die zumindest eine Ventilbohrung jeweils eingesetzte Ventil mittels einer Abdeckplatte gehalten, die auf den Einbau- oder Steuerblock aufgeschraubt ist. Die Abdeckplatte kann hierbei in einer bevorzugten Ausführungsform mit (von außen frei zugänglichen) Kontakten ausgebildet bzw. ausgerüstet sein, über die der Elektromagnet ansteuerbar ist. Alternativ ist es aber auch möglich, die Abdeckplatte mit einer Zugangsöffnung (Durchgangsloch) auszubilden, die zur Durchführung von Kabeln und/oder Stecker dient.

Weiter vorteilhaft ist es, die Ventilaufnahmebohrung zumindest in dem Bereich, mit welchen der Magnetaufnahmeabschnitt der Ventilpatrone (wenn eingebaut) in Kontakt ist, vorzugsweise eine Presspassung mit der Ventilpatrone bildet, um eine optimale Wärmeübertragung zu gewährleisten. Alternativ oder zusätzlich kann zwischen der Ventilpatrone und der Aufnahmebohrung im Einbaublock zumindest partiell eine Wärme leitende Paste eingebracht sein.

Ferner ist es für den erfindungsgemäßen Steuer- oder Einbaublock zur Aufnahme zumindest eines erfindungsgemäßen Ventils vorgesehen, diesen mit zumindest einer Aufnahmebohrung (Sacklochbohrung) für das Ventil auszubilden, die in eine der Zahl der Anschlüsse des Ventils entsprechende Anzahl von inneren Umfangsabsätzen im Einbaublock unterteilt ist. Die inneren Umfangsabsätze weiten sich ausgehend von einem axialen (inneren) Endabschnitt der Aufnahmebohrung stufenweise in Richtung zur Steuerblockaußenseite radial auf, wobei der in dieser Richtung letzte Umfangsabsatz im Einbaublock zur vorzugsweise pressgepassten Aufnahme des den Elektromagneten aufnehmenden axialen Gehäuseabschnitts des Ventils beispielsweise glattwandig (wie z.B. durch Schleifen oder Polieren) ausgebildet ist. Damit wird erreicht, dass der den Magneten aufnehmende Abschnitt der Ventilpatrone den größten Flächenkontakt mit dem Einbaublock erhält und somit bei minimal möglicher Baugröße des Ventils besonders viel an Wärmeenergie in den Block abgebbar ist.

Des Weiteren wird zur Lösung der gestellten Aufgabe gemäß einem weiteren Aspekt der Erfindung ein (elektromagnetisch betätigtes) Ventil bereitgestellt mit einem Ventilschieber, der axial verschiebbar in einer in einem Ventilgehäuse (als Ventilpatrone ausgeführt) ausgebildeten Ventilbohrung gelagert ist und einer elektromagnetischen Aktorbaugruppe (Elektromagnet) zum (ziehenden) Betätigen des Ventilschiebers vorzugsweise gegen eine Rückstellfeder. Der Ventilschieber hat erfindungsgemäß eine Anzahl von Steuerfenstern in Form von axial beabstandeten äußeren Umfangsnuten, die mit von axial beabstandeten inneren Umfangsnuten in der Ventilbohrung des Ventilgehäuses ausgebildeten Steuerkanten für ein Öffnen und Schließen des Ventils zusammenwirken. Vorteilhafter Weise sind die Steuerfenster des Ventilschiebers durch Dichtungen, insbesondere Spaltdichtungen fluidgetrennt, die am Ventilschieber zwischen den Steuerfenstern oder in der Ventilbohrung aufgenommen sind und auf das jeweils andere Bauteil dichtend drücken.

Weiter vorzugsweise bilden die Steuerfenster im Ventilschieber im Zusammenwirken mit den Steuerkanten im Ventilgehäuse zumindest zwei gleichsinnig betätigte Öffnungs-/Schließquerschnitte aus.

D.h. im Fall von mindestens drei inneren Umfangsnuten in der Ventilbohrung werden bei Betätigung der elektromagnetischen Aktorbaugruppe gleichzeitig (mindestens zwei) Fluidströmungspfade zwischen einer hierdurch sich ausbildenden zentralen Umfangsnut im Ventilgehäuse (entspricht vorzugsweise dem Pumpenanschluss) und den axial äußeren Umfangsnuten (entsprechen vorzugsweise den Arbeitsanschlüssen) gleichsinnig auf- oder zugesteuert. Hieraus resultieren im Ergebnis Fluidströmungen innerhalb der Steuerfenster in gegensinniger Strömungsrichtung, wodurch die auf den Steuerschieber einwirkenden dynamischen Strömungskräfte sich gegenseitig aufheben bzw. mindern. Dadurch kann der Steuerschieber schneller geschaltet werden, da im Wesentlichen nur Massenträgheitsmomente überwunden werden müssen. D.h. der Ventilschieber ist vorzugsweise aufgrund gleicher Flächen, die durch den gleichen Druck beaufschlagt werden, jedoch gegensinnig ausgerichtet sind hydrostatisch wie auch hydrodynamisch kraftausgeglichen.

Weiter vorteilhaft ist es, wenn die elektromagnetische Aktorbaugruppe einen Magnettopf, eine darin aufgenommene Spule und einen Distanzring bzw. einen am Magnettopf ausgebildeten Axialvorsprung hat, der sich innerhalb eines von der Ventilbohrung (in axialer Verlängerung zum Ventilschieber) ausgebildeten Betätigungsabschnitts am Ventilgehäuse abstützt, um einen Ankerraum axial zwischen dem Magnettopf und dem Ventilschieber zu definieren. In dem Ankerraum ist eine mit dem Ventilschieber direkt gekoppelte Ankerplatte über eine durch den Distanzring oder den Vorsprung bestimmte Strecke axial beweglich untergebracht. Hierdurch können die einzelnen Bauteile wie Schieber und Ankerplatte kompakt bauen, wodurch sich deren Gewicht und damit das induzierte Massenträgheitsmoment verringern lässt. Dies trägt ebenfalls zur Verkürzung der Ventilschaltzeit bei.

Vorteilhaft ist es auch, die Ventilbohrung in Axialrichtung in mehrere Stufen mit fortlaufend zunehmendem Durchmesser auszubilden, wobei der den Ventilschieber aufnehmende Abschnitt einstufig ist und der die magnetische Aktorbaugruppe aufnehmende Abschnitt ebenfalls wenigstens einstufig ist mit einem Durchmesser größer als der Durchmesser des Ventilschieberabschnitts der Durchgangsbohrung.

Schließlich sieht ein Aspekt der Erfindung ein Ventil vor mit einem Ventilschieber, der axial verschiebbar in einer in einem Ventilgehäuse ausgebildeten Ventilbohrung gelagert ist und einer elektromagnetischen Aktorbaugruppe zum vorzugsweise ziehenden Betätigen des Ventilschiebers ggf. gegen eine Rückstellfeder. Erfindungsgemäß hat der Ventilschieber (zumindest ein) Steuerfenster in Form von zumindest einer Umfangsnut, die mit von axial beabstandeten Umfangsnuten in der Ventilbohrung ausgebildeten Steuerkanten für ein Öffnen und Schließen des Ventils zusammenwirkt. Das Steuerfenster kann durch axial beabstandete Dichtungen, vorzugsweise Spaltdichtungen gedichtet sein, die gegen die Innenwand der Ventilbohrung gedrückt werden.

Vorteilhaft ist es ferner, das Ventil als ein Schieberventil in Form einer Ventilpatrone auszubilden, dessen Ventilgehäuse außenseitig mit axial fortlaufend, radial zunehmend abgestuften Umfangsabsätzen ausgebildet ist. Hierdurch kann das (bereits vormontierte) Ventil in einfacher Weise beispielsweise in einen Einbaublock eingesetzt werden. Auch hier kann der Ventilschieber vorzugsweise aufgrund gleicher Flächen, die durch den gleichen Druck beaufschlagt werden, jedoch gegensinnig ausgerichtet sind hydrostatisch wie auch hydrodynamisch kraftausgeglichen sein.

Vorzugsweise ist an einem Endabschnitt des Ventilschiebers eine Ankerplatte aus einem magnetischen Material beispielsweise durch Aufpressen, Kleben, etc. fixiert, wobei weiter vorzugsweise nachträglich (d.h. nach Befestigung der Ankerplatte auf dem Ventilschieber) der Ventilschieber und die Ankerplatte für eine konzentrische Ausrichtung gemeinsam endbearbeitet insbesondere wärmebehandelt und/oder oberflächenbeschichtet sind. Hierdurch können Toleranzen verringert und damit die Lebensdauer des Ventils erhöht werden.

Zur dieser Verlängerung der Lebensdauer des Ventils trägt in vorteilhafter Weise auch bei, dass das Ventilgehäuse zumindest im Bereich seiner äußeren radialen Umfangsfläche und/oder seiner inneren Ventilbohrung wärmebehandelt und/oder oberflächenbeschichtet ist. Zusätzlich oder alternativ kann auch der Ventilschieber zumindest im Bereich seiner äußeren radialen Umfangsfläche wärmebehandelt und/oder oberflächenbeschichtet ist. Dadurch können Abrasionen im Bereich aneinander gleitender Bauteile vermindert werden.

Schließlich ist es vorteilhaft, wenn der Ventilschieber mit einer axialen Leckagedurchgangsbohrung versehen ist, die den Ankerraum mit einem Leckageanschluss des Ventils fluidverbindet. Dies hat zum Einen den Vorteil, dass ein auf die Ankerplatte einwirkender Fluidwiderstand verringert und das Gewicht des Ventilschiebers reduziert wird. Damit verkleinert sich die Schaltzeit des Ventils.

### Kurzbeschreibung der Erfindung

Die Erfindung wird nachstehend anhand bevorzugter Ausführungsbeispiele unter Bezugnahme auf die begleitenden Zeichnungen näher erläutert.
Fig. 1 zeigt den Längsschnitt eines Magnetventils gemäß einem ersten bevorzugten Ausführungsbeispiel der Erfindung in der Variante eines NC-Ventils mit einem eingebauten Distanzring zwischen einem Elektromagneten und dem Boden eines Magnetaufnahmeraums im Ventilgehäuse zur Definition eines Ankerplattenraums,
Fig. 2 zeigt den Längsschnitt des Magnetventils gemäß Fig. 1 in der Variante eines NC-Ventils ohne einen Distanzring,

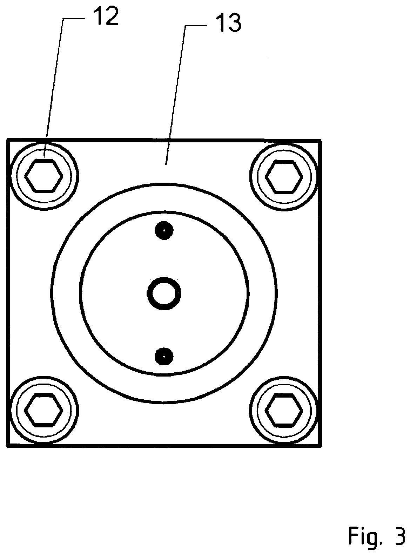

Fig. 3 zeigt die Draufsicht einer Ventilbefestigung vorzugsweise in Form einer Halte- oder Abdeckplatte,
Fig. 4 zeigt den Längsschnitt eines Magnetventils gemäß einem zweiten bevorzugten Ausführungsbeispiel der Erfindung in der Variante eines NC-Ventils mit einem eingebauten Distanzring zwischen einem Elektromagneten und dem Boden eines Magnetaufnahmeraums im Ventilgehäuse zur Definition eines Ankerplattenraums,
Fig. 5 zeigt den Längsschnitt des Magnetventils gemäß Fig. 4 in der Variante eines NC-Ventils ohne Distanzring,
Fig. 6 zeigt das Funktionsprinzip eines Zweisteuerkantenventils gemäß dem zweiten bevorzugten Ausführungsbeispiel der Erfindung mit gegensinnigen Strömungsrichtungen,
Fig. 7 zeigt die Schaltsymbole für ein Ventil gemäß dem ersten bevorzugten Ausführungsbeispiel der Erfindung in einer NC- Ausführung und einer NO-Ausführung,

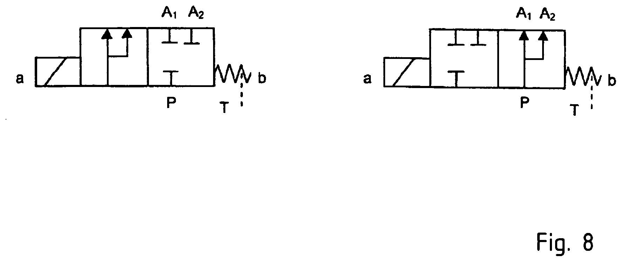

Fig. 8 zeigt die Schaltsymbole für ein Ventil gemäß dem zweiten bevorzugten Ausführungsbeispiel der Erfindung in einer NC- Ausführung und einer NO-Ausführung,
Fig. 9 zeigt einem Längsschnitt durch einen Einbaublock mit eingebautem Ventil gemäß dem zweiten bevorzugten Ausführungsbeispiel, und
Fig. 10 zeigt einen perspektivischen Längsschnitt durch den Einbaublock gemäß der Fig. 9.

### Figurenbeschreibung

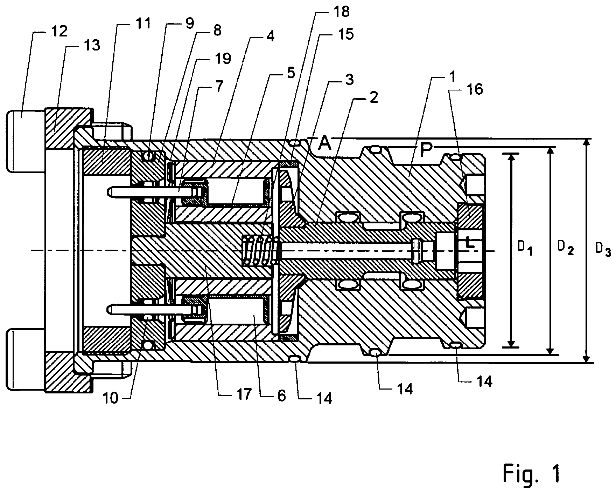

In der Fig. 1 ist im Längsschnitt ein schnellschaltendes Schaltwegeventil der Magnetventilbauart in Einsteuerkantenausführung gemäß dem ersten bevorzugten Ausführungsbeispiel der Erfindung dargestellt.

Das Ventil des ersten Ausführungsbeispiels ist in der Form einer Ventilpatrone (2/2-Wege-Cartridgeventil) ausgebildet, und hat demzufolge ein im Wesentlichen zylinderförmiges ventileigenes Gehäuse 1, in dem eine axiale durchgehende Ventilbohrung ausgebildet ist. Die Ventilbohrung lässt sich hierbei grundsätzlich in zwei Abschnitte unterteilen, nämlich einen eine Anzahl von Steuerkanten ausbildenden Ventilschieberabschnitt und einen eine elektromagnetische Aktorbaugruppe aufnehmenden Betätigungsabschnitt. Der Ventilschieberabschnitt der Ventilbohrung ist im vorliegenden Ausführungsbeispiel gemäß der Fig. 1 einstufig mit einem kleinen Bohrungsdurchmesser ausgeführt, wobei zwei axial beabstandete Umfangsnuten in den Schieberabschnitt der (Ventil-) Durchgangsbohrung ausgeformt sind. An der dem Schieberabschnitt zugeordneten axialen Stirnseite des Ventilgehäuses 1 ist der Schieberabschnitt der Durchgangsbohrung radial ausgedreht (bzw. aufgeweitet), wobei die radiale Ausdrehung mit einem Innengewinde versehen ist. In das Innengewinde ist eine Anschlagschraube 16 eingedreht, in der eine axial verlaufende Leckagedurchgangsbohrung L ausgeformt ist. Alternativ hierzu ist es auch denkbar, anstelle der Anschlagschraube 16 einen Verschlussstopfen zu verwenden, der in die Ventilbohrung eingepresst ist.

Der an den Schieberabschnitt der Durchgangsbohrung sich unmittelbar anschließende Betätigungsabschnitt der Durchgangsbohrung weist einen gegenüber dem Schieberabschnitt wesentlich größeren Innendurchmesser auf, wobei die radial innere Übergangskante zwischen dem Betätigungsabschnitt und dem Schieberabschnitt der Durchgangsbohrung angefast ist.

Der Betätigungsabschnitt erstreckt sich axial bis zu der anderen axialen Stirnseite des Ventilgehäuses 1, wobei der Betätigungsabschnitt im axialen Stirn- bzw. Endbereich des Gehäuses 1 in zwei axial beabstandete Stufen radial ausgedreht (bzw. aufgeweitet) ist. Die axial letzte Ausdrehstufe des Bestätigungsabschnitts der Durchgangsbohrung weist ein Innengewinde auf, in das eine Verschlussschraube 11 in Form eines Rings mit Außengewinde eingedreht ist. Alternativ hierzu kann die Verschlussschraube 11 auch durch einen Verschlussstopfen ersetzt sein, der in die Ventilbohrung eingepresst ist.

Im Schieberabschnitt der axialen Durchgangsbohrung ist ein Ventilschieber 2 axial verschiebbar eingesetzt. Der Ventilschieber 2 weist in seinem Mittenabschnitt ein Steuerfenster (in Form einer Umfangsnut) auf, das derart angeordnet und ausgebildet ist, dass für den Fall, dass der Ventilschieber 2 an der Anschlagsschraube 16 anliegt (Schließposition), die beiden im Schieberabschnitt der Durchgangsbohrung ausgeformten inneren Umfangsnuten (welche die Steuerkanten des Ventils ausbilden) vom Ventilsschieber 2 fluidgetrennt sind. Des Weiteren ist der Ventilschieber 2 mit einer axialen Durchgangsbohrung versehen, die mit der Leckagebohrung L in der Anschlagschraube 16 fluidverbunden ist.

Auf seinem inneren (zu der Anschlagschraube 16 abgewandten) Endabschnitt des Ventilschiebers 2 ist ein Flachanker (Ankerplatte) 3 fest aufgesetzt. Der plattenförmige Flachanker 3 weist vorzugsweise eine Anzahl von axialen Durchgangsbohrungen auf (er ist also perforiert) und ist dabei axial verschieblich im großdurchmessrigen Betätigungsabschnitt der Durchgangsbohrung gehalten. Über die Zahl und Größe der Durchgangsbohrungen im Flachanker 3 (Ankerplatte) kann die hydraulische Dämpfung durch in den Betätigungsabschnitt eingelecktes Fluid bzw. die Schaltzeit beeinflusst werden.

In einem vorbestimmten Axialabstand zum Flachanker 3 (weg vom Ventilschieber 2) ist die Aktorbaugruppe im Betätigungsabschnitt der Durchgangsbohrung angeordnet. Dieser vorbestimmte Axialabstand wird gemäß vorliegendem Ausführungsbeispiel mittels eines Distanzrings 15 eingestellt, der sich am Boden des Betätigungsabschnitts der Durchgangsbohrung abstützt und der als Axialanschlag für die Aktorbaugruppe dient.

Die Aktorbaugruppe selbst besteht aus einem äußeren, hülsenförmige Magnettopf 4, der in den Betätigungsabschnitt der Durchgangsbohrung eingesetzt ist und der an dem Distanzring 15 an dessen Stirnseite anliegt. In den Magnettopf 4 ist ein Spulenträger 5 eingesetzt, auf den eine Spule 6 aufgewickelt ist. Im Spulenträger 5 sind ferner Kontaktstifte 7 an seiner dem Flachanker 3 abgewandter Stirnseite eingesetzt, die sich axial bis in die ringförmige Verschlussschraube 11 vor erstrecken. Der Magnettopf 4 hat eine innere Durchgangsbohrung, in die ein Anschlagstift 17 eingesetzt ist. Im Anschlagstift 17 ist eine axiale Sacklochbohrung an einer dem Flachanker 3 zugewandten Stirnseite ausgeformt, in die eine Ventilfeder 18 eingesetzt ist. Die Ventilfeder 18 übt dabei eine Vorspannkraft auf den Ventilschieber 2 in Richtung zur Anschlagsschraube 16 aus. An der der Vorspannfeder 18 abgewandten Stirnseite des Anschlagstifts 17 ist ein Lagerzapfen an diesem ausgeformt, der in eine Dichtscheibe 8 fluiddicht eingesetzt ist. Die Dichtscheibe 8 stützt sich dabei dichtend radial am Betätigungsabschnitt der (Ventil-) Durchgangsbohrung ab und stützt sich hierbei axial an der ringförmigen Verschlussschraube 11 ab. Die Dichtscheibe 8 bildet somit über die Verschlussschraube 11 ein Widerlager für die Vorspannfeder 18.

Schließlich ist axial zwischen dem Magnettopf 4 und der Dichtscheibe 8 eine Wellfeder 19 zwischengefügt, welche sich ebenfalls an der Dichtscheibe 8 als Widerlager abstützt und den Magnettopf 4 gegen den Distanzring 15 für einen axialen Toleranzausgleich drückt.

Die Kontaktstifte 7 ragen hierbei durch die Wellfeder 19 sowie die Dichtscheibe 8 bis zur Verschlussschraube 19 hindurch vor. Hierfür sind in der Dichtscheibe 8 eine entsprechende Anzahl von Durchgangsbohrungen ausgeformt, in welche Kontaktstift-Abdichtungselemente 10 vorzugsweise bestehend aus einer Isolatorbuchse, einem O-Ring sowie einer Stützscheibe eingesetzt sind und welche die Durchgangsbohrungen im Bereich der Kontaktstifte 7 abdichten. Des Weiteren ist darauf hinzuweisen, dass die Dichtscheibe 8 einen umlaufenden O-Ring 9 aufweist, der in einer Umfangsnut in der Dichtscheibe 8 eingesetzt ist und der gegen die Innenwandung des Betätigungsabschnitts der Durchgangsbohrung gedrückt wird.

Das Ventilgehäuse 1 weist an dessen Außenseite eine Anzahl von axial beabstandeten Umfangsabsätzen mit unterschiedlichen Durchmessern auf. Im Konkreten ist die Umfangs-Außenseite des Ventilgehäuses 1 gemäß der Fig. 1 im Wesentlichen in drei Umfangsabsätze unterteilt. Im Bereich des Schiebeabschnitts des Ventilgehäuses 1 sind zwei Umfangsabsätze ausgebildet, die sich ausgehend von der einen Stirnseite des Gehäuses 1 (an der die Anschlagschraube 16 eingedreht ist) stufenweise radial aufweiten. Im Bereich des Betätigungsabschnitts des Ventilgehäuses 1 ist ein weiterer Umfangsabsatz ausgeformt, der sich über den gesamten Betätigungsabschnitt des Ventilgehäuses in Axialrichtung erstreckt. An der dem Betätigungsabschnitt begrenzenden Stirnseite des Ventilgehäuses 1 ist ein kragenförmiger Flansch ausgeformt, welcher bei der Montage des Ventil in einem Einbaublock an diesem anliegt und somit die Einführtiefe des patronenförmigen Ventilgehäuses 1 in dem Einbau- oder Ventilblock definiert bzw. begrenzt.

Des Weiteren werden die einzelnen Umfangsabsätze durch radial vorstehende Umfangsdichtleisten axial begrenzt. Im vorliegenden Ausführungsbeispiel ist eine erste Umfangsdichtleiste im Bereich der den Schieberabschnitt des Ventilgehäuses 1 begrenzenden Stirnseite (an der die Anschlagschraube 16 eingedreht ist) mit einem ersten Durchmesser D1 ausgeformt, der größer ist als der Durchmesser des axial unmittelbar angrenzenden Umfangsabsatzes. Dieser Umfangsabsatz wird axial innenseitig durch eine weitere Umfangsdichtleiste mit einem Durchmesser D2 größer als der Durchmesser D1 der ersten Umfangsdichtleiste begrenzt, wobei dieser zweite Durchmesser D2 der zweiten Umfangsdichtleiste ebenfalls größer ist als der Durchmesser des ebenfalls axial unmittelbar dahinter angrenzenden weiteren Umfangsabsatzes im Schieberabschnitt des Ventilgehäuses 1. Schließlich ist dieser weitere Umfangsabsatz begrenzt durch den Umfangsabsatz im Bereich des Betätigungsabschnitts mit größtem Durchmesser D3, in welchem im Übergangsbereich zwischen den beiden Umfangsabsätzen eine Umfangsnut ausgeformt ist, in die ein Dichtungsring 14 eingelegt ist.

An dieser Stelle sei darauf hingewiesen, dass sämtliche Umfangsdichtleisten mit Umfangsnuten ausgeformt sind, in die entsprechende Dichtungsringe 14 eingesetzt sind. Auf diese Weise können die im vorliegenden Ausführungsbeispiel drei axial beabstandeten Umfangsabsätze fluiddicht voneinander getrennt werden, wenn das Ventilgehäuse 1 in einem Einbau- oder Ventilblock eingesetzt wird.

Schließlich sei noch auf die geometrische Relativlage zwischen den zwei Umfangsabsätzen im Schieberabschnitt des Ventilgehäuses 1 bezüglich der Umfangsnuten in der (Ventil-) Durchgangsbohrung im Bereich des Schieberabschnitts des Ventilgehäuses 1 hingewiesen. Im vorliegenden Fall liegen nämlich die beiden Umfangsabsätze im Wesentlichen auf der gleichen axialen Ebene wie die beiden Umfangsnuten innerhalb der Durchgangsbohrung und sind über radial sich erstreckenden Bohrungen miteinander fluidverbunden. In diesem Fall bilden die beiden im Schieberabschnitt des Ventilgehäuses außenseitig ausgeformten Umfangsabsätze einen Pumpenanschluss P sowie einen Arbeitsanschluss A. Bei dem vorstehend beschriebenen Ventil handelt es sich somit um ein 2/2-Wegeventil der Magnetventil-Bauform in Einsteuerkantenausführung.

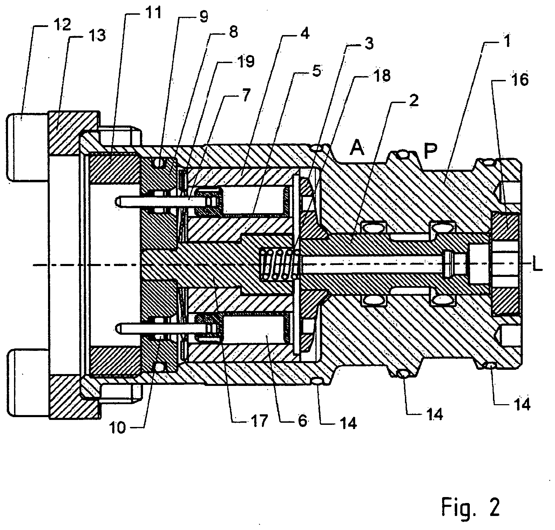

Das in der Fig. 2 dargestellte schnellschaltende Schaltwegeventil ebenfalls in Einsteuerkantenausführung stimmt hinsichtlich seines konstruktiven Aufbaus im Wesentlichen mit dem schnellschaltenden Schaltwegeventil in Einsteuerkantenausführung gemäß der Fig. 1 überein. Der einzige konstruktive Unterschied des Ventils gemäß der Fig. 2 gegenüber dem Ventil gemäß der Fig. 1 besteht darin, dass bei der Ventilausführungsform gemäß der Fig. 2 auf den vorstehend beschriebenen Distanzring 15 verzichtet wird, welcher nunmehr durch einen axialen, ringförmigen Vorsprung am Magnettopf 4 ersetzt ist, der einstückig mit Magnettopf 4 ausgeformt ist. Dies hat den Vorteil, dass die Toleranzkette verkleinert wird und dadurch das Ventil präziser vorhersehbare Funktionseigenschaften erhält.

Bei dem in der Fig. 1 und der Fig. 2 dargestellten Ventil handelt es sich somit im Grundsatz um ein elektrisch betätigtes 2/2-Wegeventil in Schieberausführung (NC-Ventil) mit den genannten Anschlüssen
- P für den Pumpenanschluss bzw. eine Druckölversorgung,
- A für einen Arbeitsanschluss und
- L für einen Tankanschluss zur Leckölabführung.

An dieser Stelle ist anzumerken, dass der Pumpenanschluss P und der Arbeitsanschluss A gegeneinander getauscht werden können. Auch ist darauf hinzuweisen, dass je nach Einsatzgebiet des erfindungsgemäßen elektromagnetisch betätigbaren Ventils gemäß der Fig. 1 und 2 der Pumpenanschluss P auch ein Tankanschluss T sein kann.

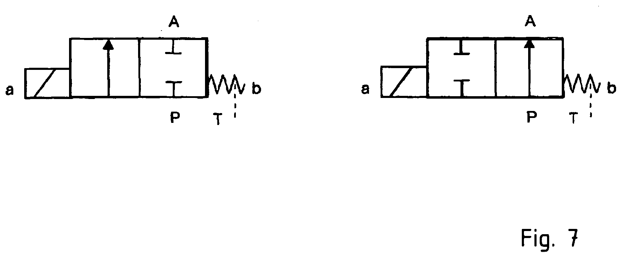

Das Ventil kann ferner wie in der Fig. 7 dargestellt ist, in zwei verschiedenen Schaltsymboliken ausgeführt werden. Bei der in der Fig. 7 links dargestellten Ausführungsform ist das Ventil im Ruhezustand geschlossen. Ein solches Ventil bezeichnet man auch als ein NC-Ventil (NC steht für "normally closed"). Ein solches Ventil ist im bestätigten Zustand des Elektromagneten vollständig geöffnet. Es entspricht der in den Fig. 1 und 2 dargestellten Bauform.

Bei der in Fig. 7 rechts dargestellten Ausführungsform ist das Ventil im Ruhezustand geöffnet. Dieses Ventil wird normalerweise als ein NO-Ventil bezeichnet (NO steht für "normally open"). Ein solches Ventil ist demzufolge in bestätigten Zustand des Elektromagneten vollständig geschlossen. In diesem Fall wäre die Vorspannfeder 18 auf Seiten der Anschlagschraube 16 platziert, um den Ventilschieber gegen den Anschlagstift 17 zu drücken. Der Elektromagnet hätte in diesem Fall keine ziehende Wirkung (wie gemäß der Fig. 1 und 2) sondern eine drückende Wirkung auf den Ventilschieber 2.

Für die nachfolgende Betrachtung wird ausschließlich die NC-Ausführung herangezogen, da es sich bei der NO-Ausführung lediglich um eine Modifikation am Ventilschieber für eine Umkehr der entsprechenden Funktionen handelt.

Im Ruhestand des Ventils (gemäß Fig. 1 in NC-Ausführung) wird der Ventilschieber 2 durch die Ventilfeder 18 an die Anschlagschraube 16 gedrückt. Dadurch wird die Verbindung zwischen dem P- und dem A-Kanal (-Anschluss) vom Ventilschieber 2 unterbrochen, so dass kein Volumenstrom fließen kann. Die für die Positionierung des Schiebers 2 benötigte Verspannkraft der Feder 18 wird durch den Einbau der Feder 18 in den entsprechenden Einbauraum im Anschlagstift 17 realisiert. Dieser stützt sich wie vorstehend bereits ausgeführt wurde an der Dichtscheibe 8 ab, die über die Verschlussschraube 11 im Ventilgehäuse 1 fixiert wird. Die Dichtscheibe 8 übernimmt des Weiteren die Funktion der Befestigung der Aktorbaugruppe. Über die Wellfeder 19 wird der Magnettopf 4 aus weichmagnetischem Sinterwerkstoff an den Distanzring 15 aus einem nichtmagnetisierbaren Wirkstoff gedrückt, der sich seinerseits am Ventilgehäuse 1 abstützt. Der Distanzring 15 übernimmt dabei zum einen die Funktion der Einstellung des Restluftspalts (vorbestimmter Axialabstand) bei betätigtem Magneten und zum anderen die Reduzierung des Streuflusses des Aktors. Die Funktion der Wellfeder 19 besteht im Wesentlichen im fertigungsbedingten Toleranzausgleich der vorhandenen Toleranzkette und zur Begrenzung der Montagekräfte auf den Magnettopf 4.

Alternativ zu dieser Ausführung kann der in Fig. 2 dargestellte Ventilaufbau herangezogen werden. Bei diesem kann durch eine Stufe im Anschlagstift 17 sowie im Magnettopf 4 auf den Distanzring 15 verzichtet werden, was eine Reduzierung der Toleranzkette und damit Fertigungs- und Montagekosten zur Folge hat.

Geschlossen wird der Magnetkreis bei betätigtem Aktor durch den Flachanker 3, der auf den Schieber 2 beispielsweise mittels eines Pressverbandes aufgeschrumpft ist. In diesem Betriebszustand des Ventils kommt der Schieber 2 am Anschlagstift 17 zur Anlage, der somit den Hub des Ventils festlegt. Zur Abführung der infolge des konstruktiv vorhandenen Dichtspalts zwischen Schieber 2 und Ventilgehäuse 1 entstehenden Leckage in die den Flachanker 3 aufnehmenden Kammer ist der Schieber 2 hohl (axiale Durchgangsbohrung im Ventilschieber 2) ausgeführt, über den die Flachankerkammer mit dem Leckageanschluss L verbunden ist. Dadurch wird ein unzulässig hoher Druckanstieg in der Flachankerkammer vermieden.

Die zwischen dem Anschluss A und der Flachankerkammer sowie dem Anschluss P und dem Leckölanschluss L entstehende Leckage wird über den L-Anschluss abgeführt. Eine Trennung der Anschlusskanäle zwischen dem Ventilgehäuse 1 und der umgebenden Anschlussbohrung erfolgt über die genannten, an dieser Stelle jedoch nicht näher definierten Dichtelemente 14. Bei diesen kann es sich z. B. um R-Ringe, O-Ringe mit entsprechenden Stützringen aber auch um jegliche andere Formen von Dichtelementen handeln. Weitere externe Dichtstellen befinden sich zwischen der Dichtscheibe 8 und dem Ventilgehäuse 1 sowie zwischen den Kontaktstiften 7 und der Dichtscheibe 8 zur Abdichtung des mit Medium befüllten Aktorraums.

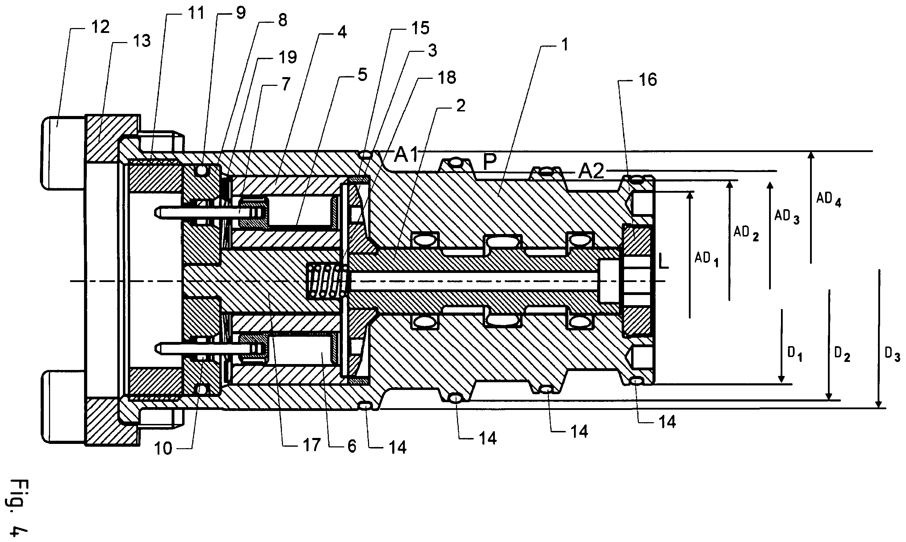

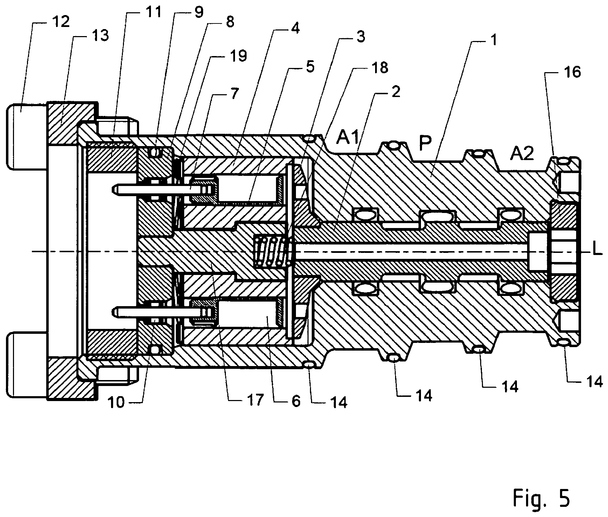

In den Figuren 4 und 5 ist ein zweites Ausführungsbeispiel für ein schnellschaltendes Schaltwegeventil diesesmal jedoch in Zweisteuerkantenausführung gemäß der Erfindung gezeigt. Aus Gründen besserer Verständlichkeit wird nachfolgend lediglich auf jene technischen Merkmale des zweiten Ausführungsbeispiels eingegangen, in welchen sich das Schaltwegeventil in Zweisteuerkantenausführung gemäß der Fig. 4 und 5 vom vorstehend beschriebenen Schaltwegeventil in Einsteuerkantenausführung gemäß der Figuren 1 und 2 unterscheidet.

Das elektromagnetisch betätigbare schnellschaltende Schaltwegeventil gemäß der Fig. 4 ist in Übereinstimmung mit dem Magnetventil gemäß den Figuren 1 und 2 ebenfalls in einen Schieberabschnitt und einem Betätigungsabschnitt axial unterteilt. Der Betätigungsabschnitt des Ventils gemäß der Fig. 4 entspricht sowohl innerhalb der Ventilbohrung als auch am äußeren Umfang des Ventilgehäuses 1 dem Betätigungsabschnitt des Magnetventils gemäß der Fig. 1, sodass an dieser Stelle auf die diesbezüglichen vorstehenden Beschreibungstextstellen verwiesen werden kann.

Im Unterschied zum Magnetventil gemäß der Figuren 1 und 2 unterscheidet sich das Magnetventil gemäß der Fig. 4 indessen im Bereich des Schieberabschnitts. Hier ist die im Ventilgehäuse 1 ausgebildete durchgehende Ventilbohrung mit drei axial beabstandeten Umfangsnuten ausgeformt (im ersten Ausführungsbeispiel sind es zwei). Dementsprechend hat der Ventilschieber 2 gemäß dem zweiten bevorzugten Ausführungsbeispiel zwei axial beabstandete Steuerfenster, die derart angeordnet und dimensioniert sind, dass der Ventilschieber 2 bei in Anlagekommen mit der Anschlagschraube 16 die drei Umfangsnuten fluiddicht voneinander trennen. Dieser Schaltzustand ist in der Fig. 4 (und auch Fig. 5) dargestellt.

Die äußere Umfangsseite des Ventilgehäuses 1 im Bereich des Schiebeabschnitts ist ebenfalls in Übereinstimmung mit dem Ausführungsbeispiel gemäß der Figuren 1 und 2 in eine der Zahl der Umfangsnuten in der Ventilbohrung entsprechende Anzahl von äußeren Umfangsabsätzen unterteilt. Auch hier ist ein erster Umfangsabsatz im stirnseitigen Bereich des Ventilgehäuses 1 mit kleinem Durchmesser AD1 ausgeformt, der axial in Richtung zum Betätigungsabschnitt in einen zweiten Umfangsabsatz mit mittlerem Durchmesser AD2 übergeht, der wiederum in Axialrichtung an einem dritten Umfangsabsatz mit größerem Durchmesser AD3 angrenzt. Dieser dritte Umfangsabsatz wird letztlich in Axialrichtung vom Umfangsabsatz mit größtem Durchmesser AD4 im Bereich des Betätigungsabschnitts des Ventilgehäuses 1 begrenzt. Die Umfangsabsätze (AD1 bis AD3) sind ferner durch Umfangsdichtleisten voneinander getrennt, wobei eine erste Umfangsdichtleiste an der äußeren Stirnseite des Schieberabschnitts des Ventilgehäuses 1 ausgebildet ist. Diese Umfangsdichtleiste hat einen größeren Durchmesser D1 als der unmittelbar daran angrenzende erste Umfangsabsatz AD1. Zwischen den ersten und zweiten Umfangsabsätzen (AD1, AD2) ist eine weitere Umfangsdichtleiste vorgesehen, welche einen Durchmesser D2 aufweist, der größer ist als der zweite Umfangsabsatz AD2. Schließlich ist zwischen den zweiten und dritten Umfangsabsätzen (AD2, AD3) eine letzte Umfangsdichtleiste ausgeformt, mit einem Durchmesser D3, der größer ist als der dritte Umfangsabsatz AD3, jedoch kleiner ist als der Umfangsabsatz AD4 im Bereich des Betätigungsabschnitts des Ventilgehäuses 1. Sämtliche Umfangsdichtleisten D1-D3 sowie der Umfangsabsatz (AD4) im Bereich des Betätigungsabschnitts im Übergangsbereich zu dem unmittelbar axial angrenzenden dritten Umfangsabsatz (AD3) sind mit Umfangsnuten ausgebildet, in denen Dichtringe 14 eingesetzt sind.

Bei dem in der Fig. 4 gezeigten Magnetventil handelt es sich somit im Grundsatz um ein elektromagnetisch betätigbares 3/2-Wegeventil in Schiebeausführung mit den Anschlüssen
- P für einen Pumpenanschluss bzw. eine Druckölversorgung,
- A₁ für einen ersten Arbeitsanschluss,
- A₂ für einen zweiten Arbeitsanschluss und
- L für einen Tankanschluss zur Leckölabführung.

Dieser Tankanschluss L ist dabei in Form einer axialen Durchgangsbohrung durch die Anschlagschraube 16 ausgebildet. Des Weiteren wird der Pumpenanschluss P durch den mittleren, das heißt, zweiten Umfangsabsatz (AD2) repräsentiert, wohingegen die beiden Arbeitsanschlüsse A₁ und A₂ durch den ersten und dritten Umfangsabsatz (AD1, AD3) im Bereich des Schiebeabschnitts des Ventilgehäuses 1 ausgeformt werden.

Die drei Umfangsabschnitte (AD1 bis AD3) im Bereich des Schiebeabschnitts des Ventilgehäuses 1 sind jeweils im Wesentlichen auf einer Axialebene mit den inneren Umfangsnuten in der Durchgangsbohrung des Ventilgehäuses 1 positioniert und sind mit den jeweils zugehörigen Umfangsnuten über Radialbohrungen im Ventilgehäuse 1 fluidverbunden.

Die Funktion des Ventils gemäß dem zweiten bevorzugten Ausführungsbeispiel der Erfindung lässt sich wie folgt umschreiben:
Im Ruhezustand des Ventils (siehe Fig. 1) wird der Ventilschieber 1 durch die Ventilfeder 18 an die Anschlagschraube 16 gedrückt. Dadurch wird die Verbindung zwischen dem P- und dem A₁- sowie A₂-Anschluss unterbrochen, so dass kein Volumenstrom fließen kann. Die für die Positionierung des Schiebers 2 benötigte Vorspannkraft der Feder 18 wird durch den Einbau der Feder 18 in den entsprechenden Einbauraum im Anschlagstift 17 realisiert. Dieser stützt sich an der Dichtscheibe 8 ab, die über die Verschlussschraube 11 im Ventilgehäuse 1 fixiert wird. Die Dichtscheibe 8 übernimmt des Weiteren die Funktion der Befestigung der Aktorbaugruppe. Über die Wellfeder 19 wird der Magnettopf 4, ebenfalls aus weichmagnetischem Sinterwerkstoff an den Distanzring 15 aus einem nichtmagnetisierbaren Werkstoff gedrückt, der sich seinerseits am Ventilgehäuse 1 abstützt. Der Distanzring 15 übernimmt somit in Übereinstimmung zum ersten bevorzugten Ausführungsbeispiel zum einen die Funktion der Einstellung des Restluftspalts bei betätigtem Magneten und zum anderen die Reduzierung des Streuflusses des Aktors. Die Funktion der Wellfeder 19 besteht auch hier im Wesentlich im fertigungsbedingten Toleranzausgleich der vorhandenen Toleranzkette und zur Begrenzung der Montagekräfte auf den Magnettopf.

Alternativ zu dieser Ausführung kann der in Fig. 5 dargestellte Ventilaufbau herangezogen werden. Bei diesem kann durch eine Stufe im Anschlagstift 17 sowie im Magnettopf 4 auf den Distanzring 15 verzichtet werden, was eine Reduzierung der Toleranzkette und damit der Fertigungs- und Montagekosten zur Folge hat.

Geschlossen wird der Magnetkreis bei betätigtem Aktor durch den Flachanker 3, der auf den Schieber 2 ebenfalls vorzugsweise mittels eines Pressverbandes aufgeschrumpft ist. In diesem Betriebszustand des Ventils kommt der Schieber am Anschlagstift 17 zur Anlage, der somit den Hub des Ventils festlegt.

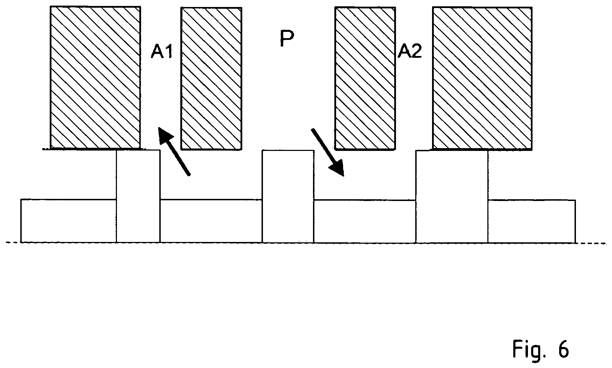

Wie in Fig. 6 dargestellt ist, fließt der Volumenstrom bei geöffnetem Schieber 2 vom Anschluss P über die erste Steuerkante zum Anschluss A₁ und gleichzeitig über die zweite Steuerkante vom Anschluss P zum Anschluss A₂. Durch die hierbei entstehenden gegengerichteten Strömungsrichtungen wird erreicht, dass sich die dynamischen Strömungskräfte auf den Ventilschieber 2 gegensinnig ausbilden und damit reduzieren. Auf diese Weise kann der Kraftbedarf/Energiebedarf zum Einschalten/Abschalten des Ventils verringert werden.

Zur Abführung der infolge des konstruktiv vorhandenen Dichtspalts zwischen dem Schieber 2 und dem Ventilgehäuse 1 entstehenden Leckage ist der Schieber 2 ebenfalls hohl ausgeführt. Dadurch wird ein unzulässig hoher Druckanstieg im Magnetraum vermieden. Die zwischen den Anschlüssen A₁ und A₂ und dem Magnet- bzw. Ankerraum sowie dem Anschluss P und dem Leckölanschluss L entstehende Leckage wird über den L-Anschluss abgeführt.

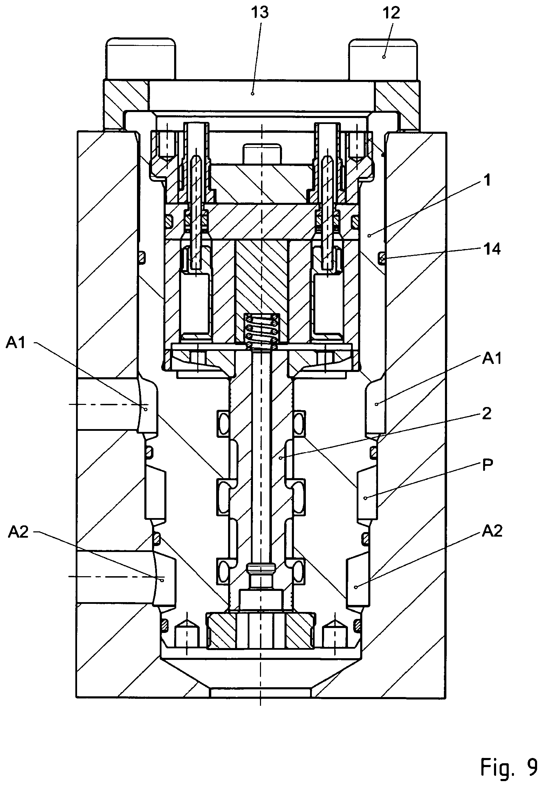

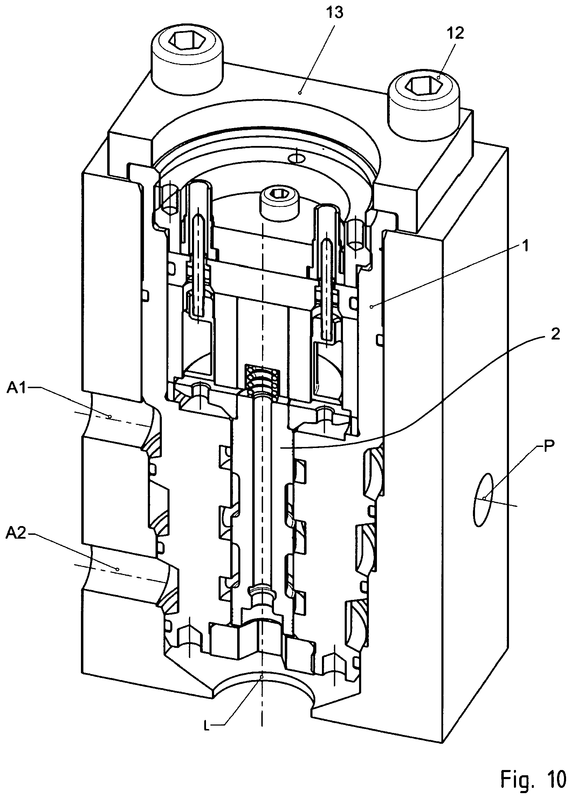

In den Fig. 9 und 10 ist ein Einbau- oder Steuerblock dargestellt, in den beispielhaft ein Ventil gemäß dem zweiten bevorzugten Ausführungsbeispiel der Erfindung eingesetzt ist. Alternativ kann aber auch ein Ventil gemäß dem ersten bevorzugten Ausführungsbeispiel verbaut sein.

Der Einbaublock ist hierfür mit einer gestuften Aufnahmebohrung ausgebildet bestehend aus einer Sacklochbohrung mit vier Bohrungsdurchmesserstufen, von denen die Stufe mit kleinstem Durchmesser am inneren Endabschnitt der Sacklochbohrung ausgebildet ist und die axial sich daran anschließenden Stufen in Richtung Stirnseite des Einbaublocks zunehmend radial aufgeweitet sind. Die Durchmesser der Stufen entsprechend dabei im Wesentlichen den Durchmessern der jeweiligen Umfangsdichtleiten bzw. dem Außendurchmesser des Ventilgehäuses 1 im Betätigungsabschnitt, sodass das patronenförmige Ventilgehäuse 1 in die Sacklochbohrung von der Stirnseite des Einbaublocks aus eingesetzt werden kann und sich hierbei die Dichtelemente 14 dichtend an der Sacklochbohrung anlegen.

Die Ventilpatrone ist soweit in die Sacklochbohrung eingeschoben, dass der Betätigungsabschnitt des Ventilgehäuses 1 und damit die darin aufgenommene elektromagnetische Aktorbaugruppe vollständig in der Sacklochbohrung aufgenommen ist. Die Einschubtiefe begrenzt hierbei der kragenförmige Anschlagflansch an der einen Stirnseite des Ventilgehäuses 1 (auf Seiten des Betätigungsabschnitts), der beim Einschieben der Patrone in die Sacklochbohrung mit der Außenfläche des Einbaublocks in Anlage kommt.

Die Sacklochbohrung im Bereich des Betätigungsabschnitts des Ventilgehäuses hat einen solchen Durchmesser, dass die Ventilpatrone in diesem Bereich in der Sacklochbohrung vorzugsweise pressgepasst ist. Hierdurch wird ein größtmöglicher Flächenkontakt zwischen Ventilgehäuse 1 und Einbaublock in diesem Bereich erzielt, um einen optimalen Wärmeübergang vom Ventilgehäuse auf den Einbaublock zu gewährleisten. Alternativ hierzu ist es aber auch möglich, den Durchmesser der Sacklochbohrung im Bereich des Betätigungsabschnitts des Ventilgehäuses geringfügig größer zu wählen als der entsprechende Außendurchmesser des Ventilgehäuses 1 (vorzugsweise eine Spielpassung), wodurch sich zwischen dem Ventilgehäuse 1 und der Sacklochbohrung ein durchgehender Ringspalt in diesem Bereich ergibt. Dieser Spalt erlaubt das flächendeckende Einbringen/Beschichten des Ventilgehäuses 1 mit einer wärmeleitenden Paste, um hierdurch den Wärmeübergang vom Ventilgehäuse 1 in den Einbaublock zu verbessern.

Gehalten wird die Ventilpatrone mittels einer Abdeckplatte 13, die per Befestigungsschrauben 12 an der Außenseite des Einbaublocks angeschraubt wird. Gemäß der Fig. 10 hat die Abdeckplatte 13 eine im Wesentlichen mittig ausgebildete Durchgangsöffnung, um einen äußeren Zugang zu den Kontaktstiften 7 der elektromagnetisch betätigten Aktorbaugruppe zu schaffen, die durch die Dichtscheibe 8 axial vorragen. Alternativ ist es aber auch möglich, die Abdeckplatte 13 mit Kontaktstiftadaptern (nicht weiter dargestellt) zu versehen, die beim Aufsetzen der Platte 13 auf die Außenseite des Einbaublocks an einem Ende mit den Kontaktstiften 7 in Kontakteingriff kommen und auf der äußeren Seite der Anlageplatte 13 frei zugängliche Anschlüsse ausbilden. In diesem Fall ist es auch möglich, dass in der Abdeckplatte 13 bereits Verkabelungen integriert sind, die sich mit der Montage der Abdeckplatte 13 quasi selbsttätig an die Kontaktstifte anschließen, um den mit einer nicht gezeigten elektrischen Steuerung verbunden werden zu können.

Die Sacklochbohrung wird beim Einsetzen der Ventilpatrone durch die am Ventilgehäuse 1 ausgeformten Umfangsdichtleiten in drei Ringkammern fluiddicht voneinander unterteilt, welche den Druckanschluss P sowie die zwei Verbraucheranschlüsse A1 und A2 ausbilden. Im Einbaublock ist ferner eine Anzahl von Bohrungen ausgeformt, die mit den Ringkammern verbunden sind und zu den äußeren Anschlüssen des Einbau- bzw. Steuerblocks (nicht weiter dargestellt) führen.

### Bezugszeichenliste

- 1: Ventilgehäuse
Schieberbaugruppe bestehend aus
- 2: - Schieber
- 3: - Flachanker
Aktorbaugruppe bestehend aus
- 4: - Magnettopf
- 5: - Spulenträger
- 6: - Spule
- 7: - Kontaktstift
- 8: - Dichtscheibe
- 9: - Dichtelement
- 10: - Kontaktabdichtung
- 15: - Distanzring
- 11: Verschlussschraube
- 12: Befestigungsschraube
- 13: Abdeckplatte
- 14: Dichtelement (Ventilgehäuse-Einbaubohrung)
- 16: Anschlagschraube
- 17: Anschlagstift
- 18: Ventilfeder
- 19: Wellfeder
- AD1: Durchmesser des ersten Umfangsabsatzes
- AD2: Durchmesser des zweiten Umfangsabsatzes
- AD3: Durchmesser des dritten Umfangsabsatzes
- AD4: Durchmesser des vierten Umfangsabsatzes
- P: Pumpenanschluss
- L: Tankanschluss zur Leckölabführung
- A: Arbeitsanschluss (allgemein)
- A1: Erster Arbeitsanschluss
- A2: Zweiter Arbeitsanschluss
- D1-D3: Erster - dritter Durchmesser der Dichtleisten

## Patentansprüche

1. Steuervorrichtung mit einem Steuerblock, in den zumindest ein Ventil eingebaut ist, das einen Ventilschieber (2), der axial verschiebbar in einem Ventilgehäuse (1) gelagert ist, und eine elektromagnetische Aktorbaugruppe zum Betätigen des Ventilschiebers (2) aufweist, wobei die elektromagnetische Aktorbaugruppe im Ventilgehäuse (1) vollständig aufgenommen ist, und wobei das Ventil derart eingebaut ist, dass die elektromagnetische Aktorbaugruppe in dem Steuerblock vollständig aufgenommen ist,
**dadurch gekennzeichnet dass**
das Ventilgehäuse (1) in einem die elektromagnetische Aktorbaugruppe aufnehmenden axialen Abschnitt an seiner äußeren Mantelseite eine glatte Wärmeübertragungsfläche ausbildet,
dass die Mantelseite des Ventilgehäuses (1) längs des darin gelagerten Ventilschiebers (2) eine der Zahl der Anschlüsse des Ventils entsprechende Zahl an Umfangsabsätzen aufweist, die sich ausgehend von einem axialen Endabschnitt des Ventilgehäuses (1) stufenweise in Richtung zum die elektromagnetische Aktorbaugruppe aufnehmenden Abschnitt radial aufweiten, und
dass die einzelnen Umfangsabsätze durch radial vorstehenden Umfangsdichtleisten axial begrenzt sind, deren Durchmesser ebenfalls ausgehend von dem axialen Endabschnitt des Ventilgehäuses (1) stufenweise in Richtung zum die elektromagnetische Aktorbaugruppe aufnehmenden Abschnitt zunimmt, wobei der Radius des die elektromagnetische Aktorbaugruppe aufnehmenden Abschnitts größer ist als der Radius der unmittelbar axial benachbarten, größtdurchmessrigen Umfangsdichtleiste,
und dass eine Abdeckplatte (13), die für ein Arretieren des zumindest einen Ventils im Steuerblock auf diesen aufgeschraubt ist.

2. Steuervorrichtung nach Anspruch 1 **dadurch gekennzeichnet, dass** die Abdeckplatte (13) mit elektrischen Anschlüssen für die elektromagnetische Aktorbaugruppe bestückt ist oder eine axiale Durchgangsöffnung für Kabel und/oder Stecker hat.

3. Steuervorrichtung nach einem der vorhergehenden Ansprüche **dadurch gekennzeichnet, dass** das Ventilgehäuse (1) als eine Ventilpatrone zur Aufnahme in dem Einbaublock ausgebildet ist.

4. Steuervorrichtung nach einem der vorhergehenden Ansprüche, **dadurch gekennzeichnet, dass** das Ventilgehäuse (1) zumindest in dem die elektromagnetische Aktorbaugruppe aufnehmenden axialen Abschnitt aus einem Metallwerkstoff besteht.

## Claims

1. Control apparatus having a control block in which at least one valve is installed, which valve has a valve slide (2) which is mounted in an axially displaceable manner in a valve housing (1), and has an electromagnetic actuator assembly for actuating the valve slide (2), wherein the electromagnetic actuator assembly is completely accommodated in the valve housing (1), and wherein the valve is installed such that the electromagnetic actuator assembly is completely accommodated in the control block,
**characterized in that**
the valve housing (1) forms, in an axial portion which accommodates the electromagnetic actuator assembly, a smooth heat transfer surface on its outer lateral side,
**in that** the lateral side of the valve housing (1) has, along the valve slide (2) mounted therein, a number, corresponding to the number of connections of the valve, of circumferential shoulders which, proceeding from an axial end portion of the valve housing (1), radially widen in a stepwise manner in the direction of the portion accommodating the electromagnetic actuator assembly,
and
**in that** the individual circumferential shoulders are axially delimited by radially projecting circumferential sealing strips whose diameter, likewise proceeding from the axial end portion of the valve housing (1), increases in a stepwise manner in the direction of the portion accommodating the electromagnetic actuator assembly, wherein the radius of the portion accommodating the electromagnetic actuator assembly is greater than the radius of the circumferential sealing strip which is immediately axially adjacent thereto and which has the greatest diameter,
and **in that** a cover plate (13), which, for arresting the at least one valve in the control block, is screwed onto the latter.

2. Control apparatus according to Claim 1, **characterized in that** the cover plate (13) is equipped with electrical connections for the electromagnetic actuator assembly or has an axial passage opening for cables and/or connectors.

3. Control apparatus according to one of the preceding claims, **characterized in that** the valve housing (1) is designed in the form of a valve cartridge for accommodation in the installation block.

4. Control apparatus according to one of the preceding claims, **characterized in that** the valve housing (1) consists of a metal material at least in the axial portion accommodating the electromagnetic actuator assembly.

## Revendications

1. Dispositif de commande avec un bloc de commande, dans lequel est intégrée au moins une vanne, qui présente un tiroir de vanne (2), qui est monté de façon déplaçable axialement dans un corps de vanne (1), et un groupe d'actionneur électromagnétique pour actionner le tiroir de vanne (2), dans lequel le groupe d'actionneur électromagnétique est entièrement logé dans le corps de vanne (1), et dans lequel la vanne est intégrée de telle manière que le groupe d'actionneur électromagnétique soit entièrement logé dans le bloc de commande,
**caractérisé en ce que**
le corps de vanne (1) forme sur son côté latéral extérieur, dans une région axiale contenant le groupe d'actionneur électromagnétique, une face lisse de transfert de chaleur,
**en ce que** le côté latéral du corps de vanne (1) présente le long du tiroir de vanne (2) monté dans celui-ci un nombre de retraits périphériques correspondant au nombre des raccords de la vanne, qui s'élargissent radialement à partir d'une partie d'extrémité axiale du corps de vanne (1) de façon échelonnée en direction de la partie contenant le groupe d'actionneur électromagnétique, et **en ce que** les retraits périphériques individuels sont limités axialement par des baguettes d'étanchéité périphériques saillantes radialement, dont le diamètre augmente également à partir de la partie d'extrémité axiale du corps de vanne (1) de façon échelonnée en direction de la partie contenant le groupe d'actionneur électromagnétique, dans lequel le rayon de la partie contenant le groupe d'actionneur électromagnétique est plus grand que le rayon de la baguette d'étanchéité périphérique du plus grand diamètre directement voisine axialement, et
**en ce que** une plaque de recouvrement (13), qui est vissée sur le bloc de commande, pour arrêter ladite au moins une vanne dans celui-ci.

2. Dispositif de commande selon la revendication 1, **caractérisé en ce que** la plaque de recouvrement (13) est équipée de raccords électriques pour le groupe d'actionneur électromagnétique ou présente une ouverture de passage axiale pour des câbles et/ou des connecteurs.

3. Dispositif de commande selon l'une quelconque des revendications précédentes, **caractérisé en ce que** le corps de vanne (1) est réalisé sous la forme d'une cartouche de vanne à loger dans le bloc intégré.

4. Dispositif de commande selon l'une quelconque des revendications précédentes, **caractérisé en ce que** le corps de vanne (1) se compose d'un matériau métallique au moins dans la partie axiale contenant le groupe d'actionneur électromagnétique.
